# EUROPÄISCHE PATENTSCHRIFT

(11) **EP 2 428 445 B1**
(45) Veröffentlichungstag und Bekanntmachung des Hinweises auf die Patenterteilung: **26.03.2014**
(21) Anmeldenummer: 11002920.4
(22) Anmeldetag: 07.04.2011
(51) Int. Cl.: B64D 1/02, B64D 17/80

(54) **Verfahren zum Absetzen eines unbemannten Flugkörpers aus einem Luftfahrzeug**
Method for releasing an unmanned aerial vehicle from an aircraft
Procédé destiné au largage d'un corps volant non habité à partir d'un aéronef

(30) Priorität: 11.09.2010 DE 102010045153
(43) Veröffentlichungstag der Anmeldung: 14.03.2012
(73) Patentinhaber: MBDA Deutschland GmbH, 86529 Schrobenhausen (DE)
(72) Erfinder: Kroyer, Robert, 81925 München (DE)
(74) Vertreter: Avenhaus, Beate

(56) Entgegenhaltungen:
- EP-A2- 1 873 058
- DE-A1- 10 230 535
- DE-A1- 10 303 788
- DE-B- 1 268 985
- FR-A1- 2 163 321
- US-A- 3 096 055

## Beschreibung

### TECHNISCHES GEBIET

Die vorliegende Erfindung betrifft ein Verfahren zum Absetzen eines unbemannten Flugkörpers aus einem Luftfahrzeug.

### STAND DER TECHNIK

Neben dem Starten von unbemannten Flugkörpern, die an oder unter Kampfflugzeugen angebracht sind, ist es an sich bekannt, unbemannte Flugkörper aus Transportflugzeugen abzusetzen. Ein derartiges Verfahren ist beispielsweise aus der DE 10 2006 029 147 A1 bekannt, wo ein unbemannter Flugkörper, der auf einer Palette in einem Behälter angeordnet ist, mitsamt dem Behälter und der Palette aus einer hinteren Ladetür eines Transportflugzeugs abgesetzt wird, wobei die Palette mit einem Bremsfallschirm aus dem Transportflugzeug herausgezogen wird. Der unbemannte Flugkörper wird dann aus der vom Fallschirm gebremsten Palette heraus gestartet. Insbesondere ist es unklar, ob der Trennvorgang des Flugkörpers aus dem auf der Palette befindlichen Behälter kollisionsfrei realisierbar ist und ob der Flugkörper nach dem Trennen in einen kontrollierten Freiflug übergeht. Zudem ist die mit dem Behälter versehene Palette nach dem Absetzen des Flugkörpers für eine weitere Verwendung verloren und wird am Fallschirm zu Boden gleiten, wobei die Erzeugung von Kollateralschäden beim Auftreffen der mit dem Behälter versehenen Palette auf den Boden nicht ausgeschlossen werden kann.

Bei anderen bekannten Verfahren wird der unbemannte Flugkörper mittels eines aus der Absetzöffnung herausgeschossenen Bremsfallschirms, dessen Leinen am Heck des Flugkörpers befestigt sind, aus dem Luftfahrzeug herausgezogen, wobei der Flugkörper jedoch außerhalb des Luftfahrzeugs eine Position einnimmt, deren Lage um die Rollachse des Flugkörpers nicht definiert ist. Bei rotationssymmetrisch ausgebildeten Flugkörpern ist dies weniger problematisch als bei Flugkörpern, die eine definierte Oberseite und eine definierte Unterseite haben, beispielsweise dann, wenn der Flugkörper mit ausklappbaren Tragflächen versehen ist.

### DARSTELLUNG DER ERFINDUNG

Aufgabe der vorliegenden Erfindung ist es, ein Verfahren zum Absetzen eines unbemannten Flugkörpers aus einem Luftfahrzeug anzugeben, mit dem einerseits den Flugkörper allein, ohne Behälter oder Käfig, aus dem Luftfahrzeug abgesetzt wird und andererseits gewährleistet wird, dass der unbemannte Flugkörper nach dem Absetzen in einen kontrollierten Freiflug übergeht.

Diese Aufgabe wird durch das Verfahren mit den Merkmalen des Patentanspruchs 1 gelöst.

Zur Lösung der Aufgabe weist das erfindungsgemäße Verfahren die folgenden Schritte auf:
a) Bereitstellen eines absetzbereiten Flugkörpers an einer Absetzöffnung des Luftfahrzeugs,
b) Absetzen des Flugkörpers aus der Absetzöffnung des Luftfahrzeugs,
c) Abbremsen des Flugkörpers mittels eines einen Bremsfallschirm bildenden ersten Fallschirms, der mit zumindest einer Bremsleine am Heck des Flugkörpers befestigt ist,
d) Öffnen eines einen Tragfallschirm bildenden zweiten Fallschirms, der mittels einer vorderen Tragleine und einer hinteren Tragleine an der Oberseite des Flugkörpers befestigt ist, und Lösen des Bremsfallschirms vom Flugkörper,
e) Lösen der vorderen Tragleine des Tragfallschirms, so dass die Nase des Flugkörpers eine Nickbewegung nach unten ausführt, und
f) Lösen der hinteren Tragleine des Tragfallschirms, so dass der Flugkörper in einen Freiflug übergeht.

### VORTEILE

Gegenüber herkömmlichen Verfahren, bei denen lediglich ein Bremsfallschirm vorgesehen ist, der den unbemannten Flugkörper vom Luftfahrzeug wegzieht, ist erfindungsgemäß ein zweiter Fallschirm vorgesehen, der an der Oberseite des Flugkörpers befestigt ist und an dem - nach dem Öffnen - der Flugkörper um seine Rollachse stabilisiert hängt. Aus dieser stabilisierten Position heraus neigt sich der Flugkörper dann nach dem zuerst erfolgenden Lösen der vorderen Tragleine mit der Nase nach unten und nimmt somit eine Fluglage ein, aus der heraus er nach dem anschließend erfolgenden Lösen der hinteren Tragleine in einen um die Rollachse stabilisierten Freiflug in Sturzflugrichtung übergeht.

Vorzugsweise erfolgt das Absetzen des Flugkörpers im Schritt b) durch Ausstoßen des Bremsfallschirms aus der Absetzöffnung und durch Öffnen des Bremsfallschirms. Die das Luftfahrzeug im Flug umströmende Luft erfasst den aus der Absetzöffnung ausgestoßenen Bremsfallschirm, öffnet ihn und zieht mit ihm den Flugkörper aus der Absetzöffnung des Luftfahrzeugs heraus, wozu der Flugkörper im Luftfahrzeug im Bereich der Absetzöffnung beispielsweise auf einer mit Rollen versehenen Palette abgelegt ist, so dass der Flugkörper nahezu gleitreibungsfrei ohne Beschädigung durch die Absetzöffnung aus dem Luftfahrzeug herausgezogen werden kann.

Das Lösen des Bremsfallschirms vom Flugkörper im Schritt d) erfolgt vorzugsweise vor dem Öffnen des Tragfallschirms oder zeitgleich mit dem Öffnen des Tragfallschirms. Auf jeden Fall wird der Tragfallschirm erst dann geöffnet, wenn der Bremsfallschirm so lange geöffnet gewesen ist, dass sichergestellt ist, dass der Flugkörper in dieser Zeit vom Bremsfallschirm hinter das Luftfahrzeug gezogen worden ist. Der Tragfallschirm wird somit zu einem Zeitpunkt geöffnet, an dem es nicht mehr erforderlich ist, den Flugkörper in der horizontalen Flugrichtung abzubremsen.

Besonders vorteilhaft ist es, wenn vor oder nach dem Lösen der vorderen Tragleine im Schritt e) oder nach dem Lösen der hinteren Tragleine im Schritt f) am Flugkörper vorgesehene, ausschwenkbare oder ausklappbare aerodynamische Wirkflächen ausgeschwenkt beziehungsweise ausgeklappt werden. Diese Wirkflächen können zum Beispiel Tragflächen und/oder Steuerflächen des Flugkörpers sein. Nachdem der Flugkörper durch den geöffneten Tragfallschirm um seine Rollachse stabilisiert worden ist, können die aerodynamischen Wirkflächen des Flugkörpers aktiviert werden und der Flugkörper kann sich aerodynamisch mittels der Wirkflächen stabilisieren. Diese aerodynamische Stabilisierung kann entweder unmittelbar vor dem Abtrennen des Tragfallschirms oder unmittelbar nach dem Abtrennen des Tragfallschirms vom Flugkörper erfolgen, wenn sich der Flugkörper dann in dem vom Tragfallschirm bewirkten stabilisierten Flugzustand um die Rollachse befindet.

Weist der Flugkörper eine Antriebsvorrichtung auf, so wird diese vorzugsweise dann gestartet, wenn der Flugkörper in den Freiflug übergegangen ist. Durch diesen Freiflug, der mit der Nase nach unten erfolgt, also einen mehr oder weniger steilen Sturzflug bedeutet, wird der zum Starten der Antriebseinrichtung erforderliche Staudruck im Triebwerk der Antriebseinrichtung aufgebaut.

Vorzugsweise wird nach dem Lösen der hinteren Tragleine des Tragfallschirms, also dann, wenn sich der Tragfallschirm vom Flugkörper vollständig getrennt hat, oder alternativ unmittelbar davor eine Flugregelungseinrichtung des Flugkörpers aktiviert. Der nach dem vollständigen Lösen des Tragfallschirms in den Freiflug übergegangene Flugkörper kann dann mittels der Flugregelungseinrichtung über seine aerodynamischen Steuerflächen stabilisiert und gelenkt werden. Die Stabilisierungsaufgabe des Tragfallschirms wird somit nach dem Übergang des Flugkörpers in den Freiflug innerhalb von kürzester Zeit von der flugkörpereigenen Flugregelungseinrichtung übernommen.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:

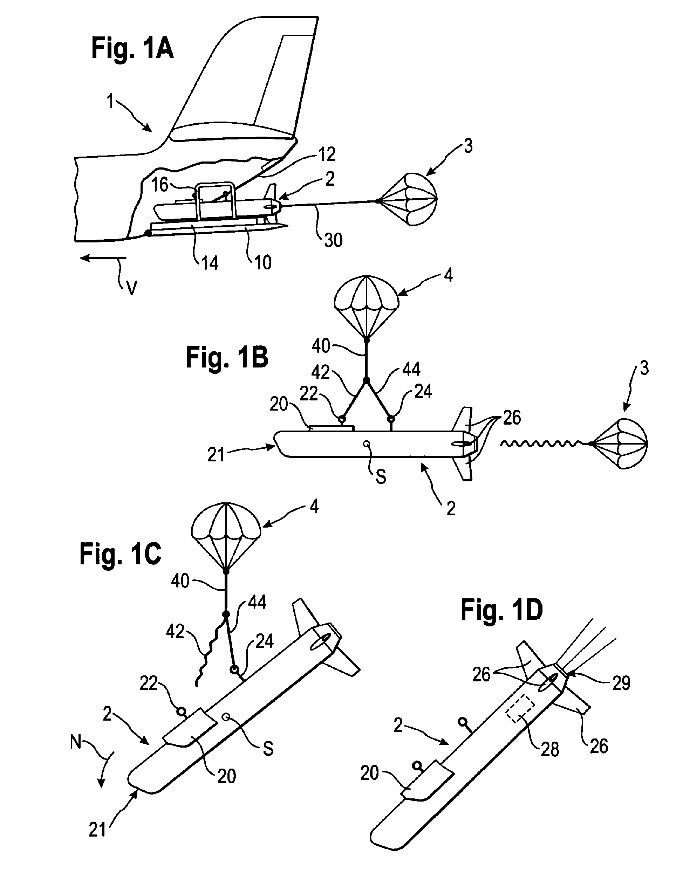

- Fig. 1A bis 1D: das Absetzen eines unbemannten Flugkörpers aus einem Trägerflugzeug in vier Sequenzen

### DARSTELLUNG VON BEVORZUGTEN AUSFÜHRUNGSBEISPIELEN

In Fig. 1A ist das Heck eines im Flug befindlichen Luftfahrzeugs 1, beispielsweise eines militärischen Transportflugzeugs, dargestellt, das ein Trägerluftfahrzeug für eine Mehrzahl von unbemannten Flugkörpern bildet. Eine Frachtraumklappe oder Frachtraumrampe 10 im Heckbereich des Luftfahrzeugs 1 ist in seine für das Absetzen von Lasten im Flug (Airdrop) vorgesehene geöffnete Stellung gebracht worden und gibt somit eine Absetzöffnung 12 im Heckbereich des Luftfahrzeugs 1 frei.

Auf der geöffneten Frachtraumrampe 10 ist eine an sich bekannte zugelassene Frachtpalette 14 positioniert, die vorher aus dem Frachtraum nach hinten auf die Frachtraumrampe verbracht worden ist. Die Palette 14 ist mit einem Gestell 16 versehen, an welchem ein unbemannter Flugkörper 2 gehaltert ist. Dieses Gestell 16 ist eine mechanische Vorrichtung, die es gestattet, einen unbemannten Flugkörper 2 für den Lufttransport zu sicher zu fixieren und dann in Verbindung mit einer Ausstosssequenz kontrolliert und sicher freizugeben. Das Gestell 16 gewährleistet, dass der Flugkörper zu jeder Zeit sicher fixiert ist und keine unerlaubten Bewegungen im Luftfahrzeug 1 ausführen kann; es handelt sich also um eine mechanische Konstruktion, die den unbemannten Flugkörper sicher fixiert und kontrolliert freigibt.

Der Flugkörper wurde unmittelbar vorher einsatzbereit gemacht, wobei der Flugkörper eine Freigabesequenz durchlaufen hat, die vergleichbar ist mit einer bekannten "Release Sequence" für "External Stores", also vergleichbar mit einer Abfolge von Steuerkommandos kombiniert mit mechanischen Vorgängen die zum Abwurf einer an einer Waffenstation eines Kampflugzeuges befestigten Aussenlast (zum Beispiel eines unbemannten Flugkörpers) durchlaufen werden.

Ein Bremsfallschirm 3, der mittels einer Zugleine 30 am Heck des Flugkörpers 2 angebracht ist, wird von einer geeigneten, an sich bekannten Vorrichtung in Bezug auf die Flugrichtung V des Trägerluftfahrzeugs 1 nach hinten ausgestoßen. Gleichzeitig werden die mechanischen Verbindungen, die den Flugkörper 2 auf der Palette 14 und/oder dem Gestell 16 haltern, gelöst. Der Flugkörper 2 kann dann vom Bremsfallschirm 3 aus der Absetzöffnung 12 des Luftfahrzeugs 1 herausgezogen werden. Die Palette 14 mit dem Gestell 16 verbleibt dabei auf der Frachtraumrampe 10 des Luftfahrzeugs 1 und wird nach dem Absetzen des Flugkörpers 2 wieder in den Innenraum des Luftfahrzeugs 1 gezogen und zur weiteren Verwendung für das Absetzen weiterer Flugkörper genutzt.

In Fig. 1B ist zu erkennen, dass sich der vom Bremsfallschirm 3 aus dem Gefahrenbereich des Luftfahrzeugs 1 nach hinten weggezogene Flugkörper 2 bereits vom Bremsfallschirm 3 gelöst hat, indem beispielsweise die Zugleine 30 des Bremsfallschirms 3 mechanisch oder pyrotechnisch vom Heck des Flugkörpers 2 abgekoppelt oder gekappt worden ist.

In Fig. 1B ist auch zu erkennen, dass sich an der Oberseite des Flugkörpers 2 ein Tragfallschirm 4 geöffnet hat, der eine obere Tragleine 40 aufweist, die an ihrem unteren Ende in eine vordere Tragleine 42 und eine hintere Tragleine 44 übergeht. Die vordere Tragleine 42 ist beispielsweise an einer vorderen Traghalterung 22 des Flugkörpers 2 angebracht und die hintere Tragleine 44 ist an einer hinteren Traghalterung 24 des Flugkörpers 2 angebracht. Diese Traghalterungen 22, 24 können die Traghalterungen des Flugkörpers 2 sein, mit denen der Flugkörper 2 auch an einem Bombenpylon eines Kampfflugzeugs angehängt werden kann.

In Fig. 1B ist weiterhin zu erkennen, dass der Flugkörper 2 an seiner Oberseite mit Tragflächen 20 versehen ist, die zur Aktivierung seitwärts ausgeschwenkt werden können. Des Weiteren weist der Flugkörper 2 im Heck vier Stabilisierungsflossen 26 auf, die sich in herkömmlicher Weise in Radialrichtung bezüglich der Flugkörperlängsachse erstrecken.

In Fig. 1C ist zu sehen, dass die vordere Tragleine 42 des Tragfallschirms 4 von der vorderen Traghalterung 22 des Flugkörpers 2 abgetrennt worden ist und der Flugkörper 2 somit nur noch über die hintere Tragleine 44 am Tragfallschirm 4 hängt. Da sich der Schwerpunkt S des Flugkörpers 2 in Längsrichtung des Flugkörpers betrachtet zwischen den beiden Traghalterungen 22, 24 befindet, dreht sich die Nase 21 des Flugkörpers 2 nach dem Lösen der vorderen Tragleine 42 in Richtung des Pfeils N nach unten; der Flugkörper 2 beschreibt somit eine nach unten gerichtete Nickbewegung. Weiterhin ist in Fig. 1C zu erkennen, dass die Tragflächen 20 seitlich ausgeschwenkt worden sind.

In Fig. 1D ist zu sehen, dass anschließend auch die hintere Tragleine 44 des Tragfallschirms 4 von der hinteren Traghalterung 24 des Flugkörpers 2 abgekoppelt worden ist, so dass der Flugkörper 2 nunmehr in einen Freiflug übergegangen ist. In diesem Freiflug wird der Flugkörper 2 von seinen Tragflächen 20 und den am Heck befindlichen Steuerflächen 26 aerodynamisch stabilisiert. Die in Fig. 1D nur schematisch dargestellte flugkörpereigene Flugregelungseinrichtung 28 hat nunmehr die Kontrolle über den Flugzustand des Flugkörpers 2 übernommen und ein im Heck des Flugkörpers befindliches Triebwerk der flugkörpereigenen Antriebseinrichtung 29 wurde gezündet.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Luftfahrzeug
- 2: Flugkörper
- 3: Bremsfallschirm
- 4: Tragfallschirm
- 10: Frachtraumrampe
- 12: Absetzöffnung
- 14: Frachtpalette
- 16: Gestell
- 20: Tragflächen
- 21: Nase des Flugkörpers 2
- 22: vordere Traghalterung
- 24: hintere Traghalterung
- 26: Stabilisierungflossen / Steuerflächen
- 28: Flugregelungseinrichtung
- 29: Antriebsvorrichtung
- 30: Zugleine
- 40: obere Tragleine
- 42: vordere Tragleine
- 44: hintere Tragleine

- N: Nickbewegung
- S: Schwerpunkt
- V: Flugrichtung

## Patentansprüche

1. Verfahren zum Absetzen eines unbemannten Flugkörpers aus einem Luftfahrzeug mit den Schritten:
a) Bereitstellen eines absetzbereiten Flugkörpers (2) an einer Absetzöffnung (12) des Luftfahrzeugs (1),
b) Absetzen des Flugkörpers (2) aus der Absetzöffnung (12) des Luftfahrzeugs (1),
c) Abbremsen des Flugkörpers (2) mittels eines einen Bremsfallschirm (3) bildenden ersten Fallschirms, der mit zumindest einer Bremsleine (30) am Heck des Flugkörpers (2) befestigt ist,
d) Öffnen eines einen Tragfallschirm (4) bildenden zweiten Fallschirms, der mittels einer vorderen Tragleine (42) und einer hinteren Tragleine (44) an der Oberseite des Flugkörpers (2) befestigt ist, und Lösen des Bremsfallschirms (3) vom Flugkörper (2),
e) Lösen der vorderen Tragleine (42) des Tragfallschirms (4), so dass die Nase des Flugkörpers (2) eine Nickbewegung nach unten ausführt, und
f) Lösen der hinteren Tragleine (44) des Tragfallschirms (4), so dass der Flugkörper (2) in einen Freiflug übergeht.

2. Verfahren nach Anspruch 1,**dadurch gekennzeichnet,dass** das Absetzen des Flugkörpers (2) im Schritt b) durch Ausstoßen des Bremsfallschirms (3) aus der Absetzöffnung (12) und durch Öffnen des Bremsfallschirms (3) erfolgt.

3. Verfahren nach Anspruch 1 oder 2,**dadurch gekennzeichnet,dass** das Lösen des Bremsfallschirms (3) vom Flugkörper (2) im Schritt d) vor dem oder zeitgleich mit dem Öffnen des Tragfallschirms (4) erfolgt.

4. Verfahren nach Anspruch 1, 2 oder 3,
**dadurch gekennzeichnet,**
**dass** nach dem Lösen der vorderen Tragleine (42) im Schritt e) oder nach dem Lösen der hinteren Tragleine (44) im Schritt f) am Flugkörper (2) vorgesehene, ausschwenkbare oder ausklappbare aerodynamische Wirkflächen, zum Beispiel Tragflächen (20) und/oder Steuerflächen (26), ausgeschwenkt beziehungsweise ausgeklappt werden.

5. Verfahren nach einem der vorhergehenden Ansprüche, wobei der Flugkörper (2) eine Antriebsvorrichtung (29) aufweist,
**dadurch gekennzeichnet,**
**dass** die Antriebsvorrichtung (29) des Flugkörpers (2) gestartet wird, nachdem der Flugkörper (2) in den Freiflug übergegangen ist.

6. Verfahren nach einem der vorhergehenden Ansprüche, wobei der Flugkörper (2) eine Flugregelungseinrichtung (28) aufweist,
**dadurch gekennzeichnet,**
**dass** die Flugregelungseinrichtung (28) des Flugkörpers (2) nach dem Lösen der hinteren Tragleine (44) vom Flugkörper (2) aktiviert wird.

7. Verfahren nach einem der Ansprüche 1 bis 5, wobei der Flugkörper (2) eine Flugregelungseinrichtung (28) aufweist,
**dadurch gekennzeichnet,**
**dass** die Flugregelungseinrichtung (28) des Flugkörpers (2) unmittelbar vor dem Lösen der hinteren Tragleine (44) vom Flugkörper (2) aktiviert wird.

## Claims

1. Method for deploying an unmanned missile from an aircraft, comprising the following steps:
a) providing a ready-for-deployment missile (2) at a deployment opening (12) of the aircraft (1),
b) deploying the missile (2) from the deployment opening (12) of the aircraft (1),
c) braking the missile (2) by means of a first parachute which forms a braking parachute (3) and which is fastened by at least one brake line (30) to the rear of the missile (2),
d) opening a second parachute which forms a carrying parachute (4) and which is fastened to the upper side of the missile (2) by means of a front carrying line (42) and a rear carrying line (44), and releasing the braking parachute (3) from the missile (2),
e) releasing the front carrying line (42) of the carrying parachute (4), with the result that the nose of the missile (2) executes a pitching movement downwardly, and
f) releasing the rear carrying line (44) of the carrying parachute (4), with the result that the missile (2) passes into free flight.

2. Method according to Claim 1,
**characterized in that** the deployment of the missile (2) in step b) takes place by ejecting the braking parachute (3) from the deployment opening (12) and by opening the braking parachute (3).

3. Method according to Claim 1 or 2, **characterized in that** the release of the braking parachute (3) from the missile (2) in step d) takes place before or at the same time as the opening of the carrying parachute (4).

4. Method according to Claim 1, 2 or 3, **characterized in that** aerodynamic active surfaces, for example airfoils (20) and/or control surfaces (26), which are provided on the missile (2) and can be pivoted out or folded out are pivoted out or folded out after the release of the front carrying line (42) in step e) or after the release of the rear carrying line (44) in step f).

5. Method according to one of the preceding claims, wherein the missile (2) has a drive device (29), **characterized in that** the drive device (29) of the missile (2) is started after the missile (2) has passed into free flight.

6. Method according to one of the preceding claims, wherein the missile (2) has a flight control device (28), **characterized in that** the flight control device (28) of the missile (2) is activated after the release of the rear carrying line (44) from the missile (2).

7. Method according to one of Claims 1 to 5, wherein the missile (2) has a flight control device (28), **characterized in that** the flight control device (28) of the missile (2) is activated immediately before the release of the rear carrying line (44) from the missile (2).

## Revendications

1. Procédé destiné au largage d'un missile téléguidé à partir d'un aéronef, comprenant les étapes suivantes :
a) fourniture d'un missile (2) prêt à être largué au niveau d'une ouverture de largage (12) de l'aéronef (1),
b) largage du missile (2) hors de l'ouverture de largage (12) de l'aéronef (1),
c) ralentissement du missile (2) au moyen d'un premier parachute formant un parachute décélérateur (3), lequel premier parachute est fixé à l'arrière du missile (2) par au moins une suspente de parachute décélérateur (30),
d) ouverture d'un deuxième parachute formant un parachute porteur (4), lequel deuxième parachute est fixé au côté supérieur de l'aéronef (2) au moyen d'une suspente avant de parachute porteur (42) et d'une suspente arrière de parachute porteur (44), et séparation du parachute décélérateur (3) du missile (2),
e) séparation de la suspente avant (42) du parachute porteur (4) de telle sorte que le nez du missile (2) effectue un mouvement de tangage vers le bas et
f) séparation de la suspente arrière (44) du parachute porteur (4) de telle sorte que le missile (2) passe à un vol libre.

2. Procédé selon la revendication 1,
**caractérisé en ce que**
le largage du missile (2) à l'étape b) s'effectue par éjection du parachute décélérateur (3) hors de l'ouverture de largage (12) et par ouverture du parachute décélérateur (3).

3. Procédé selon la revendication 1 ou 2,
**caractérisé en ce que**
la séparation du parachute décélérateur (3) du missile (2) à l'étape d) s'effectue avant l'ouverture du parachute porteur (4) ou simultanément à cette ouverture.

4. Procédé selon la revendication 1, 2 ou 3, **caractérisé en ce que**
des surfaces actives aérodynamiques prévues sur le missile (2) et pouvant être pivotées vers l'extérieur ou déployées, par exemple des surfaces portantes (20) et/ou des gouvernes (26), sont pivotées vers l'extérieur ou déployées après la séparation de la suspente avant de parachute porteur (42) à l'étape e) ou après la séparation de la suspente arrière de parachute porteur (44) à l'étape f).

5. Procédé selon l'une quelconque des revendications précédentes, dans lequel le missile (2) comprend un dispositif d'entraînement (29),
**caractérisé en ce que**
le dispositif d'entraînement (29) du missile (2) est démarré après que le missile (2) soit passé en vol libre.

6. Procédé selon l'une quelconque des revendications précédentes, dans lequel le missile (2) comprend un dispositif de commande de vol (28),
**caractérisé en ce que**
le dispositif de commande de vol (28) du missile (2) est activé après que la suspente arrière de parachute porteur (44) ait été séparée du missile (2).

7. Procédé selon l'une quelconque des revendications 1 à 5, dans lequel le missile (2) comprend un dispositif de commande de vol (28),
**caractérisé en ce que**
le dispositif de commande de vol (28) du missile (2) est activé immédiatement avant que la suspente arrière de parachute porteur (44) ait été séparée du missile (2).
